# EUROPEAN PATENT APPLICATION

(11) **EP 2 506 652 A2**
(43) Date of publication of application: **03.10.2012**
(21) Application number: 12162498.5
(22) Date of filing: 30.03.2012
(51) Int. Cl.: H04W 84/18

(54) **A method for configuring an access scheme**

(30) Priority: 31.03.2011 EP 11160639
(71) Applicant: Siemens Aktiengesellschaft, 80333 München (DE)
(72) Inventor: Bahr, Michael, 81827 München (DE)

(57) **Abstract**

The invention relates to a method of configuring temporal parameters of an access scheme, the access scheme being synchronized with other access schemes in a wireless mesh network based on the specifications of IEEE 802.11s. Implementations of access schemes came up with a considerable drawback in that an unsuitable choice of parameters at different neighboring mesh stations, especially an unsuitable choice of different DTIM intervals at the different neighboring mesh stations, will lead to overlapping reservations in some intervals. According to the invention, a method for setting a DTIM interval of a mesh station is provided, whereby a joining mesh station is determining a DTIM interval of at least one mesh station being a member of the wireless mesh network, and whereby the joining mesh station is setting its own DTIM interval to the same DTIM interval; or; to a multiple of the DTIM interval ; or; to a fraction of the DTIM interval of at least one mesh station being a member of the wireless mesh network whereby the factor and the divisor being a positive integer.

## Description

The invention relates to a method for configuring an access scheme. Specifically, the invention relates to a method of configuring temporal parameters of an access scheme, the access scheme being synchronized with other access schemes in a wireless mesh network based on the specifications of IEEE 802.11s.

In section 9.9a.3 of the known IEEE 802.11s Draft Standard for WLAN Mesh Networking, version D10.0, a deterministic access mechanism for wireless mesh networks called MCCA (Mesh Coordinated Channel Access) is described.

Hereinafter, said draft version D10.0 of the standard IEEE 802.11s is referred to as »draft standard«.

The time between subsequent DTIM Beacons (Delivery Traffic Indication Message) is divided into a fixed number of MCCA time slots. These time slots can be reserved between neighboring mesh stations. An MCCA reservation contains a periodic definition of so-called MCCAOPs (MCCA opportunities). An MCCAOP is a continuous set of MCCA time slots that can be used for transmission. The time between subsequent DTIM Beacons is also referred to as DTIM (delivery traffic indication message) interval, which is defined as an interval between consecutive beacons containing a DTIM.

The access scheme MCCA divides the DTIM interval into time slots of 32 µs and allows the reservation of blocks of these time slots in a distributed manner. Such a reservation consists of a set of MCCA opportunities, also referred to as MCCAOPs.

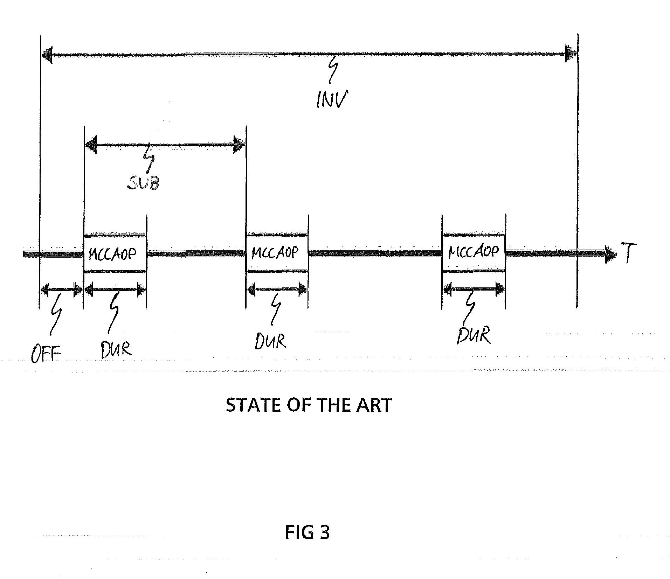

Referring to Fig. 3 which is showing reserved MCCA opportunities MCCAOP within a DTIM interval INV, an exemplary access scheme MCCA is described. The MCCA is determined by a plurality of timing parameters: An offset OFF specifies a beginning of a first MCCAOP after the beginning of the DTIM interval INV, which is assumed to begin at the very left end of a timeline T shown in Fig. 3. A periodicity specifies the number of sub-intervals SUB - each containing an MCCAOP at its beginning - scheduled in each DTIM interval INV. According to the exemplary MCCA shown in Fig. 3, the periodicity is three. A duration DUR, finally, specifies a temporal length, or, duration DUR, of a single MCCAOP.

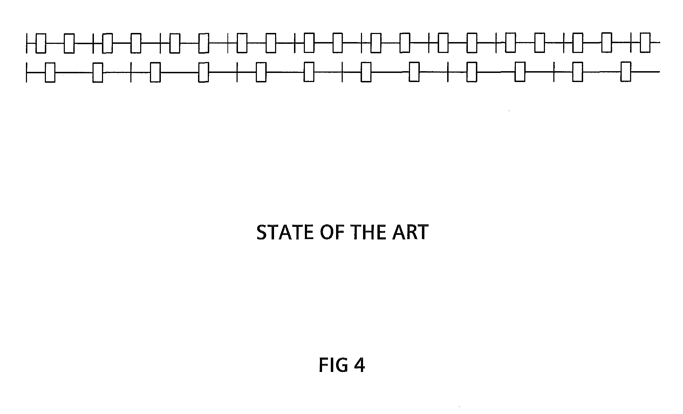

Implementations of this scheme came up with a considerable drawback in that an unsuitable choice of the parameters at the different neighboring mesh stations, especially an unsuitable choice of different DTIM intervals at the different neighboring mesh stations, will lead to overlapping MCCAOPs as shown in Fig. 4. It can be easily seen in the example according to Fig. 4 that the reservations are shifting with respect to each other, so that it comes to disadvantageous overlapping of MCCAOPs in some DTIM intervals although the first DTIM interval was without overlap.

This recognized drawback led to an amendment in version D3.04 of the draft standard by imposing a requirement on all mesh stations of a wireless mesh network to deploy a DTIM interval of common length. However, version D3.04 of the draft standard did not define how to achieve this aim. Although this requirement may be suitable to achieve a synchronization within the mesh network, the problem of enforcing this requirement on the choice of the DTIM interval in a distributed wireless mesh network remains unsolved. As to the choice of an individual DTIM interval for each mesh station it is usually assumed that the requirement is fulfilled by some default value, by an external authority responsible for the configuration, or by a distributed configuration procedure which is still to be developed.

In order to implement a DTIM interval of common length, version D10.0 of the draft standard introduced a requirement on a mesh station to maintain a synchronization with its neighboring mesh stations using a DTIM interval with a duration of 2ⁿ multiplied by a constant of 100 TU or time units.

Although said requirement allows a configuration of nested DTIM intervals - larger DTIM intervals being multiples of the smallest one - the mandatory rule of this requirement removes most of the flexibility for setting the DTIM interval and restricts the possible DTIM interval values to a very limited number, which is not adequate for the possible usages of wireless mesh networks with MCCA.

It is an object of the present invention to provide a method for the flexible configuration of temporal parameters of an access scheme, whereby the temporal parameters of the access scheme are set in a way that there is no relative temporal shift between MCCAOPs in different DTIM intervals over a sequence of DTIM intervals.

It is a further object of the present invention to provide a distributed configuration of the access scheme, enabling each single station accessing and/or building up a mesh network to set temporal parameters of the access scheme without consulting a configuration authority and without a usage of mandatory default values.

According to an embodiment of the invention, a method for setting a DTIM interval of a mesh is provided, whereby a joining mesh station is determining a DTIM interval of at least one mesh station being a member of the wireless mesh network, and whereby the joining mesh station is setting its own DTIM interval to the same DTIM interval; or; to a multiple of the DTIM interval; or; to a fraction of the DTIM interval of at least one mesh station being a member of the wireless mesh network whereby the factor and the divisor being a positive integer.

Preferred embodiments of the invention are set out in dependent claims.

These and other objects and advantages of the present invention will become more apparent and readily appreciated from the following description of the preferred embodiments, taken in conjunction with the accompanying drawing of which:
- Fig. 1: shows an exemplary structure of a wireless mesh network including a plurality of mesh stations;

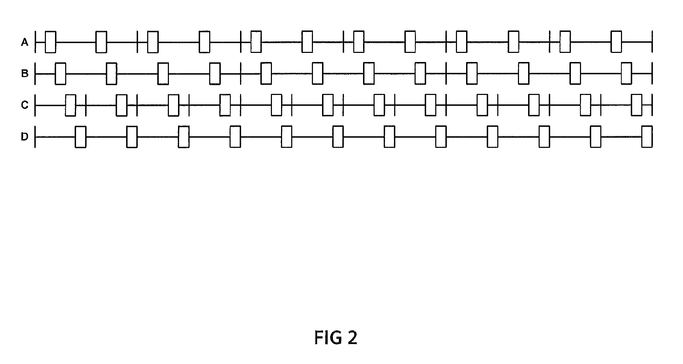

- Fig. 2: shows an exemplary timing diagram of sequential intervals, the intervals including a plurality of reserved time slots which are temporally arranged within an interval. The intervals are temporally arranged according to an embodiment of the invention;
- Fig. 3: shows an exemplary timing diagram of an interval, the interval including a plurality of reserved time slots which are temporally arranged within an interval;
- Fig. 4: shows an exemplary timing diagram of sequential intervals, the intervals including a plurality of reserved time slots which are temporally arranged within an interval in accordance with the state of the art.

Reference will now be made in detail to the preferred embodiments of the present invention, examples of which are illustrated in the accompanying drawings, wherein like reference signs refer to like elements throughout.

The time between subsequent DTIM Beacons (Delivery Traffic Indication Message) is divided into a fixed number of MCCA time slots. These time slots can be reserved between neighboring mesh stations. An MCCA reservation contains periodic definition of so-called MCCAOPs (MCCA opportunities). An MCCAOP is a continuous set of MCCA time slots that can be used for transmission. The time between subsequent DTIM Beacons is also referred to as DTIM (delivery traffic indication message) interval, which is defined is an interval between consecutive beacons containing a DTIM.

The access scheme MCCA divides the DTIM interval into time slots of 32 µs and allows the reservation of blocks of these time slots in a distributed manner. Such a reservation consists of a set of MCCA opportunities, also referred to as MCCAOP.

An example of an MCCAOP reservation schedule is shown in Figure 3 within a DTIM interval INV. The MCCA is determined by a plurality of timing parameters.

A periodicity specifies the number of sub-intervals SUB - each containing an MCCAOP at its beginning - scheduled in each DTIM interval INV. In this particular example, the MCCAOP Periodicity equals three, so that there are three MCCAOPs in each DTIM interval. A duration DUR, finally, specifies a temporal length, or, duration DUR, of a single MCCAOP. As further illustrated in the Figure 3, the MCCAOP Offset value OFF indicates the beginning of the first MCCAOP in each DTIM interval INV, which is assumed to begin at the very left end of a timeline T shown in Fig. 3.

Implementations of the MCCA scheme came up with a considerable drawback in that an unlucky choice of the parameters at the different neighboring mesh stations, especially an unlucky choice of different DTIM intervals at the different neighboring mesh stations, will lead to overlapping MCCAOPs as shown in Figure 4.

In the example of Figure 4, the timing parameters are as follows. A first MCCA reservation shown in the upper part of Fig. 4 is set to a DTIM interval of seven, an offset of one, a duration of one and a periodicity of two. A second MCCA reservation shown in the lower part of Figure 4 is set to a DTIM interval of eleven, an offset of two, a duration of one and a periodicity of two. It can be easily seen in the example according to Fig. 4 that the reservations are shifting with respect to each other, so that it comes to disadvantageous overlapping of MCCAOPs in some DTIM intervals although the first DTIM interval was without overlap.

This recognized drawback led to an amendment in version D3.04 of the draft standard by imposing a requirement on all mesh stations of a wireless mesh network to deploy a DTIM interval of common length. However, version D3.04 of the draft standard did not define how to achieve this aim. Although this requirement may be suitable to achieve a synchronization within the mesh network, the problem of enforcing this requirement on the choice of the DTIM interval in a distributed wireless mesh network remains unsolved. As to the choice of an individual DTIM interval for each mesh station it is usually assumed that the requirement is fulfilled by some default value, by an external authority responsible for the configuration, or by a distributed configuration procedure which is still to be developed.

In order to implement a DTIM interval of common length, version D10.0 of the draft standard introduced a requirement on a mesh station to maintain a synchronization with its neighboring mesh stations using a DTIM interval with a duration of 2ⁿ multiplied by a constant of 100 TU or time units.

Although said requirement allows a configuration of nested DTIM intervals - larger DTIM intervals being multiples of the smallest one - the mandatory rule of this requirement removes most of the flexibility for setting the DTIM interval and restricts the possible DTIM interval values to a very limited number, which is not adequate for the possible usages of wireless mesh networks with MCCA.

These problems known in the art are addressed by an embodiment of the invention described hereinafter. According to this embodiment of the invention, a method in an IEEE 802.11s mesh network is described whereby the objective of this method is to obtain that the DTIM interval at mesh stations is set in a way that there is no relative shift of MCCAOPs between sequential DTIM intervals.

Hereinafter, a DTIM interval is understood as a time interval between consecutive beacons containing a delivery traffic indication message or DTIM. A DTIM is only present in beacons sent at the beginning of a new DTIM period. The value of the DTIM interval, expressed in time units, or TU, is equal to the product of a value in a Beacon Interval field and a value in a DTIM Period subfield. Said DTIM Period subfield is contained within an element captioned »TIM« or traffic indication map, the TIM being present in a beacon frame. One time unit corresponds to 1,024 µs.

Hereinafter, a mesh basic service set or MBSS is understood as a wireless mesh network according to IEEE 802.11s. A mesh station is understood as a mesh node in an MBSS.

Since mesh stations join a mesh network sequentially, there is a first mesh station in the mesh network. According to an embodiment of the invention, subsequent mesh stations will adopt the DTIM interval of the first mesh station, or in more general terms, of the mesh stations that are already a member of the MBSS, during mesh discovery following some restrictions in the choice of their DTIM interval.

After the determination of the active mesh profile, the mesh station may establish a new MBSS or become a new member to an existing MBSS. If the mesh station establishes a new MBSS, it uses the values for the DTIM interval, i.e. beacon interval and DTIM period, as configured. In other words, it can use any allowed value for the beacon interval and the DTIM period.

If the mesh station becomes a new member to an existing MBSS, hereinafter referred to as »joining mesh station«, and the joining mesh station has enabled MCCA (dot11MCCAActived is true), the joining mesh station learns its neighborhood DTIM intervals by receiving Beacon frames from neighboring mesh stations of the MBSS with »dot11MCCAActivated« equal to true.

According to an embodiment of the invention, the joining mesh station chooses its DTIM interval according to one of the following rules:
a) Same DTIM interval
   The DTIM interval of the joining mesh station is set to the same DTIM interval of one of the mesh stations of the MBSS from that the joining mesh station received Beacon frames or Probe Response frames with the MCCA Enabled subfield of the Mesh Capability field of the Mesh Configuration element equal to 1.
b) Multiple of DTIM interval
   The DTIM interval of the joining mesh station is set to a multiple of the DTIM interval of one of the mesh stations of the MBSS from that the joining mesh station received Beacon frames or Probe Response frames with the MCCA Enabled subfield of the Mesh Capability field of the Mesh Configuration element equal to 1. The factor is a power of 2 (e.g. 2, 4, 8, 16, 32, ...)
c) Fraction of DTIM interval
   The DTIM interval of the joining mesh station is set to a fraction of the DTIM interval of one of the mesh stations of the MBSS from that the joining mesh station received Beacon frames or Probe Response frames with the MCCA Enabled subfield of the Mesh Capability field of the Mesh Configuration element equal to 1. The divisor is a power of 2, e.g. 2, 4, 8, 16, 32, etc.

In rules b) and c), the factor or divisor is advantageously a power of any number m being a positive integer, or, in other words, natural number.

Another requirement according to an alternative embodiment of the invention is that rules b) and c) always use the same number m in the same MBSS. This alternative embodiment ensures that DTIM intervals of different length fit into each other very nicely. That is, the end of the longest DTIM interval is also the end of any of the shorter DTIM intervals. This prevents the shifting of the relative position of MCCAOPs in subsequent DTIM intervals.

An advantageous choice of m = 2 allows a rather natural and flexible way of finding multiples or fractions (double or half). It is also easy to compute by computers.

After the determination of the DTIM interval, the joining mesh station starts beaconing using the START primitive.

Of course, it would be beneficial if all mesh stations of a MBSS determine their DTIM interval according to the rules a), b), or c) independent of whether they use MCCA or not, that is, independent of the setting of the MCCA Enabled subfield. The invention provides a simple mechanism that ensures that DTIM intervals of mesh stations in an MBSS fulfill certain conditions that ensure an advantageous repetition pattern of MCCAOPs. Especially, MCCAOPs of different neighboring mesh stations do not shift in their relative position in subsequent DTIM intervals.

The invention does not need any transmission of additional messages. All necessary information can be achieved with frames already provided by the draft standard transmitted, including beacons and probe response frames.

The invention works in a distributed environment such as a wireless mesh network.

The invention requires only minimal external configuration efforts, only the configuration of the first mesh station of the mesh MBSS.

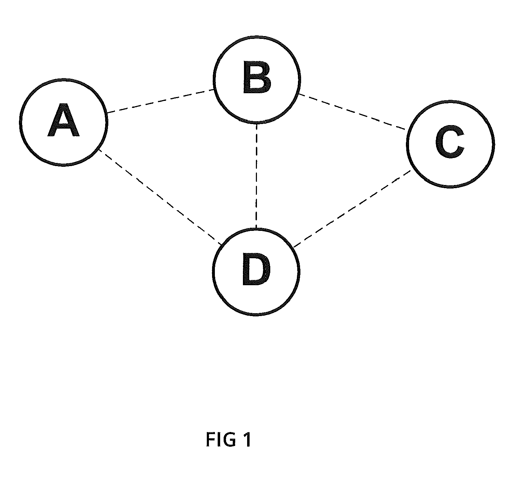

With reference to Fig. 1, an exemplary embodiment of the invention will be described. According to this embodiment, a wireless mesh network entitled »Mesh_A« is assumend, comprising mesh stations A, B, C and D as shown in Fig. 1.

The possible wireless connectivity is indicated by the dotted lines connecting the mesh stations. The mesh stations are being switched on and are joining the mesh »Mesh_A« in the following order: mesh station A first, than mesh station B followed by mesh station C and as the last one mesh station D. All mesh stations in »Mesh_A« have set a flag captioned »dot11MCCAActivated« to true, thereby expressing that a usage of MCCA is envisaged. A subfield captioned »MCCA Enabled« in the »Mesh Capability« field of the Mesh Configuration element in beacon frames and in probe response frames is set to true.

In a following phase, mesh station A is switched on. Mesh station A discovers that there is no MBSS available it can join. Therefore, mesh station A establishes the MBSS captioned »Mesh_A« with mesh station A as the only member. Since mesh station A establishes the MBSS »Mesh_A« as the initial mesh station, it chooses the configuration parameters for the DTIM interval according to some default or external configuration. Here the following values are assumed:
- Beacon Interval: 1,000 TU
- DTIM Period: 10
- DTIM Interval = 10,000 TU

In a following phase, mesh station B is switched on. Mesh station B discovers mesh station A announcing MBSS »Mesh_A« during the scanning process. Mesh station B sets its mesh profile in such a way that it can join »Mesh_A«. Since mesh station B has MCCA enabled, i.e. »dot11MCCAActivated« is set to true, and the MCCA Enabled subfield in the Mesh Capability field of the Mesh Configuration element in the beacon frames and probe response frames of mesh station A has been set to 1, mesh station B will follow the rules given in the invention in order to determine its DTIM interval. Mesh station B will follow rule b), multiple of DTIM interval, with a factor of two. Mesh station B will therefore use the following values:
- Beacon Interval: 1,000 TU (is kept the same as beacon interval from mesh station A)
- DTIM Period: 20 (is derived from DTIM interval and beacon interval)
- DTIM Interval = 20,000 TU (DTIM interval of mesh station A * 2)

In order to achieve a DTIM interval of 20,000 TU, mesh station B could also use different values of beacon interval and DTIM period as long as their product is the required DTIM interval. An alternative configuration for the same DTIM interval is:
- Beacon Interval: 2,000 TU
- DTIM Period: 10
- DTIM Interval = 20,000 TU (DTIM interval of mesh station A * 2)

In a following phase, mesh station C is switched on. Mesh station C discovers mesh station B announcing MBSS »Mesh_A« during the scanning process. Mesh station C cannot receive beacon frames or probe response frames from mesh station A. Mesh station C sets its mesh profile in such a way that it can join »Mesh_A«. Since mesh station C has MCCA enabled, i.e. »dot11MCCAActivated« is set to true, and the MCCA Enabled subfield in the Mesh Capability field of the Mesh Configuration element in the beacon frames and probe response frames of mesh station B has been equal to 1, mesh station C will follow the rules given in the invention in order to determine its DTIM interval. Mesh station C will follow rule c) (fraction of DTIM interval) with the divisor = 2^2 = 4. Mesh station C will therefore use the following values:
- Beacon Interval : 1,000 TU (is kept the same as beacon interval from mesh station B)
- DTIM Period: 5 (is derived from DTIM interval and beacon interval)
- DTIM Interval = 5,000 TU (DTIM interval of mesh station B / 4)

In order to achieve a DTIM interval of 5,000 TU, mesh station C could also use different values of beacon interval and DTIM period as long as their product is the required DTIM interval. An alternative configuration for the same DTIM interval is :
- Beacon Interval : 500 TU
- DTIM Period: 10
- DTIM Interval = 5,000 TU (DTIM interval of mesh station B / 4)

In a following phase, mesh station D is switched on. Mesh station D discovers mesh stations A, B, and C announcing MBSS »Mesh_A« during the scanning process. Mesh station D sets its mesh profile in such a way that it can join »Mesh_A«. Since mesh station D has MCCA enabled (»dot11MCCAActivated« is true) and the MCCA Enabled subfield in the Mesh Capability field of the Mesh Configuration element in the beacon frames and probe response frames of mesh stations A, B, and C has been equal to 1, mesh station D will follow the rules given in the invention in order to determine its DTIM interval. Mesh station D will follow rule a) (same DTIM interval) with respect to mesh station A. Mesh station D will therefore use the following values:
- Beacon Interval : 1,000 TU (same as beacon interval from mesh station A)
- DTIM Period: 10 (same as DTIM period from mesh station A)
- DTIM Interval = 10,000 TU (same as DTIM interval of mesh station A)

In order to achieve a DTIM interval of 10,000 TU, mesh station D could also use different values of beacon interval and DTIM period as long as their product is the required DTIM interval. An alternative configuration for the same DTIM interval is:
- Beacon Interval : 2,000 TU
- DTIM Period: 5
- DTIM Interval = 10,000 TU (same as DTIM interval of mesh station A)

The mesh stations of MBSS »Mesh_A« have now the following values for their DTIM interval :
- mesh station A: 10,000 TU
- mesh station B: 20,000 TU
- mesh station C: 5,000 TU
- mesh station D: 10, 000 TU.

Applying these settings, there is no shifting of MCCAOP between subsequent DTIM intervals as can be seen in Figure 4. Embodiments of the invention can be implemented in computing hardware (computing apparatus) and/or software, including but not limited to any computer or microcomputer that can store, retrieve, process and/or output data and/or communicate with other computers.

The processes can also be distributed via, for example, downloading over a network such as the Internet. A program/software implementing the embodiments may be recorded on computer-readable media comprising computer-readable recording media. The program/software implementing the embodiments may also be transmitted over a transmission communication media such as a carrier wave. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

The invention has been described in detail with particular reference to preferred embodiments thereof and examples, but it will be understood that variations and modifications can be effected within the spirit and scope of the invention covered by the claims.

## Claims

1. A method for setting a DTIM interval of a mesh station joining a wireless mesh network based on the specifications of IEEE 802.11s,
the method comprising the steps of
- determining, by the joining mesh station, a DTIM interval of at least one mesh station being a member of the wireless mesh network,
- setting, by the joining mesh station, a DTIM interval of the joining mesh station, the DTIM interval being
- the same DTIM interval of at least one mesh station being a member of the wireless mesh network; or;
- a multiple of the DTIM interval of at least one mesh station being a member of the wireless mesh network whereby the factor being a positive integer; or;
- a fraction of the DTIM interval of at least one mesh station being a member of the wireless mesh network whereby the divisor being a positive integer.

2. Method according to claim 1,
said factor or said divisor being a power of a positive integer with a coefficient being a non-negative integer.

3. Method according to claim 2,
said positive integer being a value of two.

4. Method according to one of the aforementioned claims 2 and 3,
said positive integer being identical for all mesh stations of said wireless mesh network including said joining mesh station.

5. A node in a mesh network comprising means for carrying out a method defined according to one of claims 1 to 4.

6. Computer program product, which contains a program code stored on a computer-readable medium and which, when executed on a processor of a node in a mesh network, carries out a method according to one of claims 1 to 4.

7. A data storage carrier that stores a computer program to cause a node in a mesh network to perform a method according to one of claims 1 to 4.
